# EUROPEAN PATENT APPLICATION

(11) **EP 4 169 394 A1**
(43) Date of publication of application: **26.04.2023**
(21) Application number: 21215614.5
(22) Date of filing: 17.12.2021
(51) Int. Cl.: A24D 1/20, A24D 3/02, A24D 3/04, A24D 3/06, A24D 3/10, A24D 3/16, A24D 1/04

(54) **PAPER TUBE**

(30) Priority: 22.10.2021 GB 202115251
(71) Applicant: Essentra Filter Products Development Co. Pte. Ltd., Singapore 068877 (SG)
(72) Inventor: QOLBI, Rosi Ana, 61256 Sidoarjo (ID); ANINDYA, Ian, 61256 Sidoarjo (ID); GIYATO,, 61256 Sidoarjo (ID); WIDODO, Sulistyo, 61256 Sidoarjo (ID); WIDIARTO, Sudirman, 61256 Sidoarjo (ID)
(74) Representative: Bates, Philip Ian

(57) **Abstract**

The present invention provides a mouthpiece or filter element (e.g., for a smoking article such as a cigarette, a tobacco heating product, a HNB product) comprising a longitudinally extending (e.g., substantially cylindrical) hollow tube of paper or other biodegradable (e.g., non-cellulose acetate) material; a layer comprising paper filtering material and/or other biodegradable (e.g., non-cellulose acetate containing) filtering material engaged around the hollow tube; and a wrapper (e.g., plugwrap) engaged around the layer comprising paper filtering material and/or other biodegradable (e.g., non-cellulose acetate containing) filtering material.

## Description

### INTRODUCTION

The present invention provides a mouthpiece or filter element for use with a smoking article such as a cigarette, tobacco heating product or a heat-not-burn product.

### BACKGROUND

Mouthpieces or filter elements for smoking articles such as cigarettes, tobacco heating products or heat-not-burn (HNB) products may be manufactured from a number of different materials. Presently, 98% of commercial cigarette filters comprise an amount of cellulose acetate (source: Euromonitor International). However, cellulose acetate is not biodegradable and, as a result, cigarette filters (and cigarette butts) comprising cellulose acetate may persist in the environment for many years. Due to this, and in consideration of new EU legislation coming into force by 2021 (aimed at reducing the use of single-use plastics such as cellulose acetate filters), there is increasing interest in filter elements (such as mouthpieces) that do not comprise single-use plastics and are biodegradable.

An alternative filtration material to cellulose acetate is paper. Filters comprising paper as the filtering material are well known in the art. Paper filters offer a number of advantages over cellulose acetate filters in terms of enhanced biodegradability and higher filtration efficiencies at a given pressure drop. However, they also have a number of disadvantages compared to cellulose acetate filters, for example they may have a deleterious effect on the taste of the cigarette, reduced filter firmness and an unattractive pre and post-smoking appearance (as a result of staining). Further, paper filters typically have a reduced retention of toxic phenolic compounds and a much higher retention of tar and nicotine than those made from cellulose acetate. Thus the experience of smoking cigarettes with conventional paper filters is not comparable to that from a conventional cellulose acetate filtered cigarette.

It is therefore desirable to provide a mouthpiece or filter element for a smoking article (e.g., a cigarette, a tobacco heating product, a heat-not-burn (HNB) product) which provides acceptable filtration properties and firmness (i.e., hardness) while having an improved biodegradability compared to conventional materials such as cellulose acetate.

### SUMMARY OF THE INVENTION

According to the present invention in a first aspect there is provided a mouthpiece or filter element (e.g., for a smoking article such as a cigarette, a tobacco heating product, a HNB product) comprising a longitudinally extending (e.g., substantially cylindrical) hollow tube of paper or other biodegradable (e.g., non-cellulose acetate) material; a layer comprising paper filtering material and/or other biodegradable (e.g., non-cellulose acetate containing) filtering material engaged around the hollow tube; and a wrapper (e.g., plugwrap) engaged around the layer comprising paper filtering material and/or other biodegradable (e.g., non-cellulose acetate containing) filtering material.

The paper or other biodegradable (e.g., non-cellulose acetate) material and the paper filtering material and/or other biodegradable (e.g., non-cellulose acetate containing) filtering material used in the present invention are biodegradable and have an enhanced biodegradability compared to cellulose acetate. Therefore, the present invention provides a mouthpiece or filter element of enhanced biodegradability, and thus is more environmentally friendly and is more in line with EU legislation.

The term "biodegradable" refers to the material, filtering material, mouthpiece or filter element being able to exhibit a biodegradation of at least 90% after 6 months under controlled composting conditions (see ISO14855-1 Determination of the ultimate aerobic biodegradability of plastic materials under controlled composting conditions - Method by analysis of evolved carbon dioxide).

Preferably the biodegradable material, filtering material, mouthpiece or filter element is "readily biodegradable". The phrase "readily biodegradable" refers to the material, filtering material, mouthpiece or filter element being able to disintegrate rapidly and completely biodegrade when immersed in water. Preferably the material, filtering material, mouthpiece or filter element has the 'Ready Biodegradability' level of biodegradability as measured according to OECD 301B 'Ready Biodegradability' method (modified Sturm test), which is well known in the art. The phase "readily biodegradable" will here be understood to mean 'Ready Biodegradability' level of biodegradability.

The applicants have found that a mouthpiece or filter element (e.g., for a smoking article such as a cigarette, a tobacco heating product, a HNB product) that comprises a longitudinally extending (e.g., substantially cylindrical) hollow tube of paper or other biodegradable (e.g., non-cellulose acetate) material; a layer comprising paper filtering material and/or other biodegradable (e.g., non-cellulose acetate containing) filtering material engaged around the hollow tube; and a wrapper (e.g., plugwrap) engaged around the layer comprising paper filtering material and/or other biodegradable (e.g., non-cellulose acetate containing) filtering material provides excellent filtration properties and filtration performance, while also being biodegradable.

Preferably the cross-section of the mouthpiece or filter element is uniform (e.g., uniform axial cross-section).

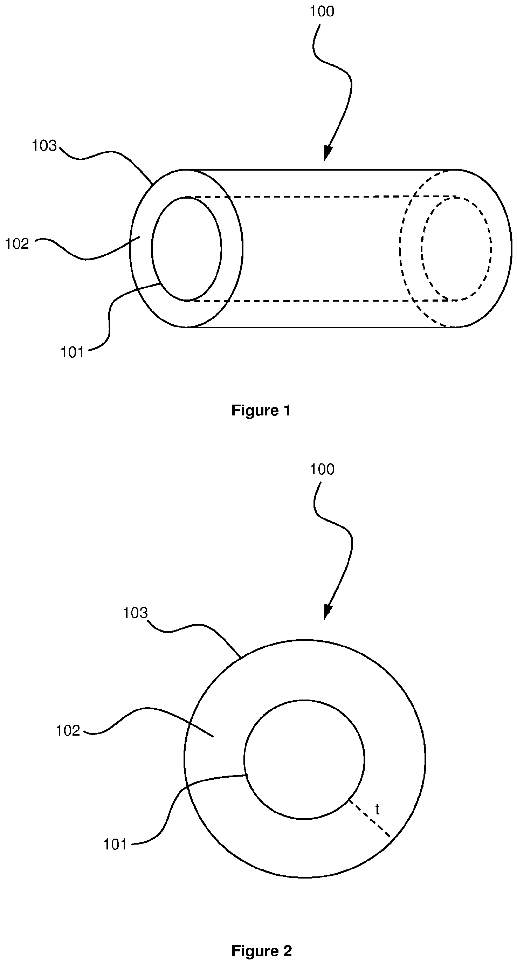

Preferably the cross-section of the mouthpiece or filter element is annular, meaning the cross-section of the mouthpiece or filter element has an inner perimeter or circumference and an outer perimeter or circumference. Preferably the inner perimeter or circumference is circular, meaning the hollow tube is substantially cylindrical in shape. Preferably the outer perimeter or circumference is circular, meaning the mouthpiece or filter element is substantially cylindrical in shape. This can be seen in e.g., Figure 2. However, the inner perimeter or circumference and the outer perimeter or circumference may be any shape. For example, the outer perimeter or circumference may be circular or oval in shape and the inner perimeter or circumference may be circular, semi-circular (D-shaped), square, triangular, star shaped, trilobal, pentagonal or cog-shaped cross-section, or in the shape of a logo or other pattern.

Preferably the circumference or perimeter of the hollow tube of paper or other biodegradable (e.g., non-cellulose acetate) material is from 4 to 25 mm, e.g., from 5 to 20 mm, e.g., from 6 to 18 mm, e.g., from 8 to 10 mm.

Preferably the paper or other biodegradable (e.g., non-cellulose acetate) material of the hollow tube is paper (e.g., a plugwrap) of basis weight from 80 to 150 gsm. For example, a paper (e.g., plugwrap) of basis weight from 90 to 140 gsm, for example a paper (e.g., plugwrap) of basis weight from 100 to 120 gsm, for example a paper (e.g., plugwrap) of basis weight of 100 gsm.

The applicants have found that the use of a paper (e.g., plugwrap) wrapper of basis weight from 80 to 150 gsm provides a suitably rigid hollow tube which supports the layer comprising paper filtering material and/or other biodegradable (e.g., non-cellulose acetate containing) filtering material and maintains its tubular shape. Advantageously, a paper (e.g., plugwrap) wrapper of basis weight from 80 to 150 gsm is also biodegradable.

Preferably the layer comprising paper filtering material and/or other biodegradable (e.g., non-cellulose acetate containing) filtering material is engaged around the hollow tube along the full (e.g., longitudinal) length of the hollow tube. In other words, the layer comprising paper filtering material and/or other biodegradable (e.g., non-cellulose acetate containing) filtering material circumscribes the hollow tube along the full (e.g., longitudinal) length of the hollow tube so there is substantially no underlap or extension beyond the full (e.g., longitudinal) length of the hollow tube.

Preferably the layer comprising paper filtering material and/or other biodegradable (e.g., non-cellulose acetate containing) filtering material engaged around the hollow tube is of width or thickness (t) from 0.6 to 2.0 mm, e.g., from 0.8 to 1.8 mm, e.g., from 1.0 to 1.6 mm, e.g., 1.3 mm. This can be seen in e.g., Figure 2.

The term "width or thickness" will here be readily understood to mean the shortest distance from any position on the circumference of the hollow tube (e.g., if the hollow tube is substantially cylindrical) to the outer circumference or perimeter of the layer comprising paper filtering material and/or other biodegradable (e.g., non-cellulose acetate containing) filtering material. However, it will be appreciated that, unless the layer comprising paper filtering material and/or other biodegradable (e.g., non-cellulose acetate containing) filtering material is engaged uniformly around the hollow tube (e.g., in a circular shape) then there may be more than one value for width or thickness. Further, it will be appreciated that if the cross-section of the hollow tube (i.e., the inner perimeter or circumference) is semi-circular (D-shaped), square, triangular, star shaped, trilobal, pentagonal or cog-shaped cross-section, or in the shape of a logo or other pattern then there may be more than one value for width or thickness. The term "width or thickness" will here be readily understood to mean the shortest distance from any position on the perimeter of the hollow tube to the circumference or perimeter of the layer comprising paper filtering material and/or other biodegradable (e.g., non-cellulose acetate containing) filtering material.

The paper filtering material and/or other biodegradable (e.g., non-cellulose acetate containing) filtering material may be paper (in any form) which is conventionally used in mouthpieces or filter elements. The paper may be, for example, filter paper, non-woven paper, airlaid paper or cellulose/lyocell/viscose based paper. The paper may be a non-woven paper made with non-plastic plant based fibres (e.g., flax, hemp, jute, sisal, abaca, coconut, bamboo, starch or wood pulp) or a blend of these materials.

The paper filtering material and/or other biodegradable (e.g., non-cellulose acetate containing) filtering material may be in the form of a blend of different paper filtering materials and/or other biodegradable (e.g., non-cellulose acetate containing) filtering materials. The paper may be coated with a hydrophobic coating or hydrophobic material.

The applicants have found that the use of non-woven papers (e.g., made with non-plastic plant based fibres (e.g., flax, hemp, jute, sisal, abaca, coconut, bamboo, starch or wood pulp) and/or airlaid papers are particularly suitable because they are flexible and straightforward to manufacture into a layer engaged around the hollow tube, have excellent filtration properties and filtration performance, while also being biodegradable. Further, the applicants have found the use of non-woven papers (e.g., made with non-plastic plant based fibres (e.g., flax, hemp, jute, sisal, abaca, coconut, bamboo, starch or wood pulp) and/or airlaid papers provides a unique visual end appearance that is appealing to the consumer and may help in combating counterfeiting.

The layer comprising paper filtering material and/or other biodegradable (e.g., non-cellulose acetate containing) filtering material may be comprised of multiple (i.e., more than one) sheets or layers of paper filtering material and/or other biodegradable (e.g., non-cellulose acetate containing) filtering material.

The layer comprising paper filtering material and/or other biodegradable (e.g., non-cellulose acetate containing) filtering material may comprise carbon (e.g., activated carbon granules). The paper filtering material and/or other biodegradable (e.g., non-cellulose acetate containing) filtering material may be impregnated or embedded with carbon.

Preferably the wrapper engaged around the layer comprising paper filtering material and/or other biodegradable (e.g., non-cellulose acetate containing) filtering material is paper (e.g., a plugwrap) of basis weight from 50 to 150 gsm, e.g., a paper (e.g., plugwrap) of basis weight from 60 to 140 gsm, e.g., a paper (e.g., plugwrap) of basis weight from 70 to 130 gsm, e.g., a paper (e.g., plugwrap) of basis weight from 80 to 120 gsm, e.g., a paper (e.g., plugwrap) of basis weight of 100 gsm.

The applicants have found that the use of a paper (e.g., plugwrap) wrapper of basis weight from 50 to 150 gsm engaged around the layer comprising paper filtering material and/or other biodegradable (e.g., non-cellulose acetate containing) filtering material is a suitable outer wrap and may provide a firmness (i.e., hardness) similar to cellulose acetate based tubes (e.g., hollow acetate tubes), which in turn may provide the mouthpiece or filter element with a desirable firmness (i.e., hardness). Advantageously, a paper (e.g., plugwrap) wrapper of basis weight 50 to 150 gsm is biodegradable.

The wrapper (e.g., plugwrap) engaged around the layer comprising paper filtering material and/or other biodegradable (e.g., non-cellulose acetate containing) filtering material may be non-porous. Alternatively, the wrapper (e.g., plugwrap) engaged around the layer comprising paper filtering material and/or other biodegradable (e.g., non-cellulose acetate containing) filtering material may be ventilated or air permeable, with an air permeability of from 0 to 32,000 Coresta units.

Preferably the wrapper engaged around the layer comprising paper filtering material and/or other biodegradable (e.g., non-cellulose acetate containing) filtering material is engaged around the layer comprising paper filtering material and/or other biodegradable (e.g., non-cellulose acetate containing) filtering material along the full (e.g., longitudinal) length of the layer. In other words, the wrapper engaged around the layer comprising paper filtering material and/or other biodegradable (e.g., non-cellulose acetate containing) filtering material circumscribes the layer comprising paper filtering material and/or other biodegradable (e.g., non-cellulose acetate containing) filtering material along the full (e.g., longitudinal) length of the layer so there is substantially no underlap or extension beyond the layer.

The mouthpiece or filter element may be biodegradable, with greater than 90% biodegradability as measured according to ISO14855-1 Determination of the ultimate aerobic biodegradability of plastic materials under controlled composting conditions - Method by analysis of evolved carbon dioxide.

Preferably the mouthpiece or filter element has 'Ready Biodegradability' level of biodegradability as measured according to OECD 301B 'Ready Biodegradability' method (modified Sturm test).

Preferably the length of the mouthpiece or filter element is from 5 to 50 mm, e.g., from 10 to 30 mm, e.g., from 8 to 24 mm, e.g., from 15 to 20 mm, e.g., 18 mm.

Preferably the circumference or perimeter of the mouthpiece or filter element is from 14 to 30 mm, e.g., from 16 to 25 mm, e.g., from 24 to 25 mm.

The mouthpiece or filter element may comprise a smoke or vapour modifying agent which may modify or enhance the consumer experience. The smoke or vapour modifying agent may impart an additional taste or aroma to the vapour passing through the mouthpiece or filter or may be able to supress certain flavours or aromas. The smoke or vapour modifying agent may be located on or in the hollow tube, layer comprising paper filtering material and/or other biodegradable (e.g., non-cellulose acetate containing) filtering material or the wrapper. The smoke or vapour modifying agent may be a liquid additive (e.g., a flavour enhancing additive). The flavour enhancing additive may be any known in the art, for example an additive which reduces the "paper taste" (e.g., menthol, peppermint, fruit, berry, vanilla, chocolate, coffee etc. with a suitable carrier e.g., propylene glycol, vegetable glycerine, medium-chain triglyceride (MCT) oil, other oils).

The inclusion of a flavour enhancing additive or additives may overcome the "paper taste" sensation and may provide a smoking article (e.g., a cigarette, e.g., a tobacco heating product, e.g., a HNB product) with sensory characteristics similar to those from cellulose acetate filtered smoking articles.

According to the present invention there is provided a smoking article (e.g., a cigarette, e.g., a tobacco heating product, e.g., a HNB product) comprising a mouthpiece or filter element as herein described and claimed below, or a filter including a mouthpiece or filter element as herein described and claimed below, joined to a wrapped tobacco rod with one end of the mouthpiece or filter element facing towards the tobacco rod.

It will be appreciated that the smoking article (e.g., a cigarette, e.g., a tobacco heating product, e.g., a HNB product) may comprise one or more discrete further segments (e.g., of a HNB mouthpiece, e.g., filter elements). The discrete further segments may be (e.g., cylindrical) plugs of filtering material (e.g., paper filtering material and/or other biodegradable (e.g., non-cellulose acetate containing) filtering material) or a (e.g., cylindrical) rod of tobacco (e.g., any form of tobacco(including reconstituted tobacco)).

The applicants have found that a smoking article (e.g., a cigarette, e.g., a tobacco heating product, e.g., a HNB product) comprising a mouthpiece or filter element according to the present invention may have a reduction in the appearance of staining at the mouth end (i.e., the smoker's mouth end) in comparison to a conventional (e.g., non-annular) mouthpiece or filter element. Further mouthpieces or filter elements of the invention may provide adequate cooling and airflow of the smoke or vapour, as well as a unique end appearance that is appealing to the consumer and may help in combating counterfeiting.

It will be appreciated that the mouthpiece or filter element may be used in any multi-segment filter or consumable as a single segment. The filter construction could be two, three, four or more discrete segments. The filter may be attached to a tobacco rod (which can be made from any form of tobacco (including reconstituted). The filter may include other segments that include capsules, carbon, CPS, tubes, acetate, paper, menthol etc.

According to the present invention there is also provided a method for making a mouthpiece or filter element comprising the steps of:
gathering and securing a sheet of paper or other biodegradable (e.g., non-cellulose acetate) material to form a longitudinally extending hollow tube;
advancing two or more sheets of paper filtering material and/or other biodegradable (e.g., non-cellulose acetate containing) filtering material in a longitudinal direction;
separating the two or more sheets of longitudinally advancing paper filtering material and/or other readily biodegradable (e.g., non-cellulose acetate containing) filtering material;
gathering or winding (e.g., spiraling) the separated sheets of longitudinally advancing paper filtering material and/or other biodegradable (e.g., non-cellulose acetate containing) filtering material around the longitudinally extending hollow tube to form a layer comprising paper filtering material and/or other biodegradable (e.g., non-cellulose acetate containing) filtering material engaged around the hollow tube;
gathering and securing a wrapper (e.g., plugwrap) around the layer comprising paper filtering material and/or other biodegradable (e.g., non-cellulose acetate containing) filtering material; and
cutting the continuous rod to form individual mouthpieces or filter elements.

Preferably the two or more sheets of paper filtering material and/or other biodegradable (e.g., non-cellulose acetate containing) filtering material are separated by a separator (e.g., a cone separator).

The applicants have found that the use of a separator to separate the two or more sheets of paper filtering material and/or other biodegradable (e.g., non-cellulose acetate containing) filtering material ensures an even spread of sheets, thus forming a uniform layer comprising paper filtering material and/or other biodegradable (e.g., non-cellulose acetate containing) filtering material engaged around the hollow tube (e.g., in a circular shape). Advantageously, the separator provides uniform width or thickness of the layer comprising paper filtering material and/or other biodegradable (e.g., non-cellulose acetate containing) filtering material.

The separated sheets of paper filtering material and/or other biodegradable (e.g., non-cellulose acetate containing) filtering material may be wound (e.g., spirally) around the longitudinally extending hollow tube by a spinning jet.

The applicants have found that the use of a spinning jet to wind (e.g., spirally) the separated sheets of paper filtering material and/or other biodegradable (e.g., non-cellulose acetate containing) filtering material provides a longitudinally spiralling layer comprising paper filtering material and/or other biodegradable (e.g., non-cellulose acetate containing) filtering material of uniform width or thickness.

Preferably the paper or other biodegradable (e.g., non-cellulose acetate) material of the hollow tube is paper (e.g., a plugwrap) of basis weight from 80 to 150 gsm, e.g., a paper (e.g., plugwrap) of basis weight from 90 to 140 gsm, e.g., a paper (e.g., plugwrap) of basis weight from 100 to 120 gsm, e.g., a paper (e.g., plugwrap) of basis weight 100 gsm.

The applicants have found that the use of a paper (e.g., plugwrap) wrapper of basis weight from 80 to 150 gsm provides a suitably rigid hollow tube which supports the separated sheets of longitudinally advancing paper filtering material and/or other biodegradable (e.g., non-cellulose acetate containing) filtering material as they are gathered or wound (e.g., spirally) around the longitudinally extending hollow tube to form a layer comprising paper filtering material and/or other biodegradable (e.g., non-cellulose acetate containing) filtering material.

The two or more sheets of paper filtering material and/or other biodegradable (e.g., non-cellulose acetate containing) filtering material may be paper (in any form) which is conventionally used in mouthpieces or filter elements. The paper may be, for example, filter paper, non-woven paper, airlaid paper or cellulose/lyocell/viscose based paper. The paper may be a non-woven paper made with non-plastic plant based fibres (e.g., flax, hemp, jute, sisal, abaca, coconut, bamboo, starch or wood pulp) or a blend of these materials.

The two or more sheets of paper filtering material and/or other biodegradable (e.g., non-cellulose acetate containing) filtering material may be in the form of a blend of different paper filtering materials and/or other biodegradable (e.g., non-cellulose acetate containing) filtering materials. The two or more sheets of paper filtering material and/or other biodegradable (e.g., non-cellulose acetate containing) filtering material paper may be coated with a hydrophobic coating or hydrophobic material. It will be appreciated that the two or more sheets of paper filtering material and/or other biodegradable (e.g., non-cellulose acetate containing) filtering material may be comprised of the same sheets of paper filtering material and/or other biodegradable (e.g., non-cellulose acetate containing) filtering material or they may be different sheets of paper filtering material and/or other biodegradable (e.g., non-cellulose acetate containing) filtering material (e.g., to give a blend of paper filtering material and/or other biodegradable (e.g., non-cellulose acetate containing) filtering material).

The applicants have found that the use of non-woven papers (e.g., made with non-plastic plant based fibres (e.g., flax, hemp, jute, sisal, abaca, coconut, bamboo, starch or wood pulp) and/or airlaid papers are particularly suitable because they are flexible and straightforward to manufacture into a layer engaged around the hollow tube.

The two or more sheets of paper filtering material and/or other biodegradable (e.g., non-cellulose acetate containing) filtering material may each have a width of 15 to 100 mm, for example 30 to 80 mm, for example 40 to 70 mm, for example 50 to 60 mm, for example 70 mm.

The two or more sheets of longitudinally advancing paper filtering material and/or other biodegradable (e.g., non-cellulose acetate containing) filtering material may comprise 2, 3 or 4 sheets of longitudinally advancing paper filtering material and/or other biodegradable (e.g., non-cellulose acetate containing) filtering material.

The applicants have found that the use of two or more sheets (e.g., 2, 3 or 4 sheets) of longitudinally advancing paper filtering material and/or other biodegradable (e.g., non-cellulose acetate containing) filtering material helps to center the paper filtering material and/or other biodegradable (e.g., non-cellulose acetate containing) filtering material around the hollow tube. Thus the paper filtering material and/or other biodegradable (e.g., non-cellulose acetate containing) filtering material forms a uniform layer (i.e., of uniform width of thickness) around the hollow tube.

Preferably the wrapper is a paper (e.g., a plugwrap) of basis weight from 50 to 150 gsm, e.g., a paper (e.g., plugwrap) of basis weight from 60 to 140 gsm, e.g., a paper (e.g., plugwrap) of basis weight from 70 to 130 gsm, e.g., a paper (e.g., plugwrap) of basis weight from 80 to 120 gsm, e.g., a paper (e.g., plugwrap) of basis weight 100 gsm.

Preferably adhesive is used to secure the paper or other biodegradable (e.g., non-cellulose acetate) material into a longitudinally extending hollow tube (i.e., secured by a lapped and stuck seam as is known in the art) and to secure the wrapper around the layer comprising paper filtering material and/or other biodegradable (e.g., non-cellulose acetate containing) filtering material (i.e., secured by a lapped and stuck seam as is known in the art).

According to the present invention there is provided a mouthpiece or filter element obtained by the method as herein described and claimed below.

The present invention will now be described in further detail by reference to the attached Figures in which:
Figure 1 shows a schematic view of a mouthpiece or filter element according to the invention;
Figure 2 shows the cross-sectional profile of the invention shown in Figure 1;

Figure 1 illustrates a schematic view of a mouthpiece or filter element 100 which is of length 108 mm and circumference 24.2 mm. The mouthpiece or filter element 100 comprises a longitudinally extending hollow tube 101 of paper of basis weight 100 gsm, length 108 mm and circumference 16 mm; a layer 102 comprising airlaid non-woven paper filtering material of width/thickness about 1.3 mm engaged around the hollow tube 101; and a plugwrap 103 of basis weight 100 gsm engaged around the layer comprising airlaid non-woven paper filtering material 102.

Figure 2 shows the cross-sectional profile of the mouthpiece or filter element 100. Mouthpiece or filter element 100 has an annular cross-section with an inner circumference of 16 mm (defined by hollow tube 101) and an outer circumference of 24.2 mm (defined by the circumference of the mouthpiece or filter element 100, which is defined by the wrapper 103). The width/thickness (t) of layer 102 is about 1.3 mm.

The mouthpiece or filter element 100 may be made by using techniques known in the art by a method comprising the steps of:
gathering and securing a sheet of paper of basis weight 100 gsm with a lapped and stuck seam to form the longitudinally extending hollow tube 101;
advancing four sheets of airlaid non-woven paper filtering material of width 70 mm in a longitudinal direction;
separating the four sheets of longitudinally advancing airlaid non-woven paper filtering material by a cone separator;
gathering the four separated sheets of longitudinally advancing airlaid non-woven paper filtering material around the longitudinally extending hollow tube 101 to form layer 102 comprising airlaid non-woven paper filtering material engaged around hollow tube 101;
gathering and securing a plugwrap 103 of basis weight 100 gsm with a lapped and stuck seam around the layer comprising airlaid non-woven paper filtering material; and
cutting the continuous rod at 108 mm intervals to form the individual mouthpiece or filter element 100.

### Example 1

The biodegradability of the paper filtering material and/or other biodegradable (e.g., non-cellulose acetate containing) filtering material used in mouthpieces or filter elements of the present invention was compared with the biodegradability of known cellulose acetate filters and filters containing cellulose acetate.

The biodegradability was measured according to ISO14855-1 Determination of the ultimate aerobic biodegradability of plastic materials under controlled composting conditions - Method by analysis of evolved carbon dioxide. The test provides a measure of the biodegradability of a material (expressed as a percentage) over a 180 day period under optimal oxygen, temperature and moisture conditions.

Table 1 shows the biodegradability results for a Mono-Acetate filter, an airlaid paper filter (Genia), a wood pulp paper filter, a hemp paper filter and two BiTech^{™} filters (50% acetate/50% paper and 25 % acetate/75% paper) compared to a standard cellulose acetate (CA) filter rod when tested according to the method of lSO14855-1. Filters were purchased or made according to methods known in the art.

**Table 1**

| **Filter** | Mono-Acetate | 50/50 BiTech^{™} | 25/75 BiTech^{™} | Wood Pulp Paper (100%) | Hemp Paper (100%) | Genia (Airlaid) |
|---|---|---|---|---|---|---|
| **Length (mm)** | 108 | 108 | 108 | 108 | 108 | 108 |
| **Circumference (mm)** | 24.2 | 24.2 | 24.2 | 24.2 | 24.2 | 24.2 |
| **Plug wrap (gsm)** | 27 | 27 | 27 | 27 | 27 | 27 |
| **Hardness (%)** | 90 | 90 | 90 | 88 | 89 | 88.5 |
| **Biodegradation % compared to CA reference after 180 days** | 87.2 | 87.8 | 93.9 | 99.5 | 95.6 | 94.1 |

Table 1 shows that wood pulp paper and hemp paper have the highest biodegradability of all the filtering materials. Further, the airlaid paper (Genia) and 25/75 BiTech^{™} also demonstrate good biodegradability compared to CA. It will be appreciated that 25/75 BiTech^{™} is biodegradable (as measured according to ISO14855-1). Thus this filtering material is within the invention even though it contains an amount of cellulose acetate (i.e., 25% cellulose acetate).

Thus the paper filtering material and/or other biodegradable filtering material used in mouthpieces or filter elements of the present invention degrade faster and more extensively than cellulose acetate.

## Claims

1. A mouthpiece or filter element comprising a longitudinally extending (e.g., substantially cylindrical) hollow tube of paper or other biodegradable (e.g., non-cellulose acetate) material;
a layer comprising paper filtering material and/or other biodegradable (e.g., non-cellulose acetate containing) filtering material engaged around the hollow tube; and
a wrapper (e.g., plugwrap) engaged around the layer comprising paper filtering material and/or other biodegradable (e.g., non-cellulose acetate containing) filtering material.

2. A mouthpiece or filter element according to claim 1 wherein the cross-section of the mouthpiece or filter element is uniform and/or the cross-section of the mouthpiece or filter element is annular.

3. A mouthpiece or filter element according to any preceding claim wherein the circumference of the hollow tube of paper or other biodegradable (e.g., non-cellulose acetate) material is from 4 to 25 mm, e.g., from 5 to 20 mm, e.g., from 6 to 18 mm, e.g., from 8 to 10 mm and/or the paper or other biodegradable (e.g., non-cellulose acetate) material of the hollow tube is a paper (e.g., plugwrap) of basis weight from 80 to 150 gsm, e.g., a paper (e.g., plugwrap) of basis weight from 90 to 140 gsm, e.g., a paper (e.g., plugwrap) of basis weight from 100 to 120 gsm, e.g., a paper (e.g., plugwrap) of basis weight 100 gsm.

4. A mouthpiece or filter element according to any preceding claim wherein the layer comprising paper filtering material and/or other biodegradable (e.g., non-cellulose acetate containing) filtering material is engaged around the hollow tube along the full (e.g., longitudinal) length of the hollow tube and/or the layer comprising paper filtering material and/or other biodegradable (e.g., non-cellulose acetate containing) filtering material engaged around the hollow tube is of width or thickness from 0.6 to 2.0 mm, e.g., from 0.8 to 1.8 mm, e.g., from 1.0 to 1.6 mm, e.g., 1.3 mm.

5. A mouthpiece or filter element according to any preceding claim wherein the paper filtering material and/or other biodegradable (e.g., non-cellulose acetate containing) filtering material is filter paper, non-woven paper, airlaid paper or cellulose/lyocell/viscose based paper and/or the paper filtering material and/or other biodegradable (e.g., non-cellulose acetate containing) filtering material is a non-woven paper made with non-plastic plant based fibres (e.g., flax, hemp, jute, sisal, abaca, coconut, bamboo, starch or wood pulp) or a blend of these materials.

6. A mouthpiece or filter element according to any preceding claim wherein the layer comprising paper filtering material and/or other biodegradable (e.g., non-cellulose acetate containing) filtering material is comprised of multiple (i.e., more than one) sheets or layers of paper filtering material and/or other biodegradable (e.g., non-cellulose acetate containing) filtering material and/or the layer comprising paper filtering material and/or other biodegradable (e.g., non-cellulose acetate containing) filtering material comprises carbon (e.g., activated carbon granules).

7. A mouthpiece or filter element according to any preceding claim wherein the wrapper engaged around the layer comprising paper filtering material and/or other biodegradable (e.g., non-cellulose acetate containing) filtering material is a paper (e.g., a plugwrap) of basis weight from 50 to 150 gsm, e.g., a paper (e.g., plugwrap) of basis weight from 60 to 140 gsm, e.g., a paper (e.g., plugwrap) of basis weight from 70 to 130 gsm, e.g., a paper (e.g., plugwrap) of basis weight from 80 to 120 gsm, e.g., a paper (e.g., plugwrap) of basis weight of 100 gsm and/or the wrapper (e.g., plugwrap) engaged around the layer comprising paper filtering material and/or other biodegradable (e.g., non-cellulose acetate containing) filtering material is non-porous.

8. A mouthpiece or filter element according to any preceding claim wherein the mouthpiece or filter element has greater than 90% biodegradability as measured according to ISO14855-1 Determination of the ultimate aerobic biodegradability of plastic materials under controlled composting conditions - Method by analysis of evolved carbon dioxide and/or the mouthpiece or filter element has 'Ready Biodegradability' level of biodegradability as measured according to OECD 301B 'Ready Biodegradability' method (modified Sturm test).

9. A mouthpiece or filter element according to any preceding claim wherein the length of the mouthpiece or filter element is from 5 to 50 mm, e.g., from 10 to 30 mm, e.g., from 8 to 24 mm, e.g., from 15 to 20 mm, e.g., 18 mm and/or the circumference of the mouthpiece or filter element is from 14 to 30 mm, e.g., from 16 to 25 mm, e.g., from 24 to 25 mm.

10. A smoking article (e.g., a cigarette, e.g., a tobacco heating product, e.g., a HNB product) comprising a mouthpiece or filter element according to any preceding claim, or a filter including a mouthpiece or filter element according to any preceding claim, joined to a wrapped tobacco rod with one end of the filter facing towards the tobacco rod.

11. A multi-segment filter comprising a mouthpiece or filter element according to any preceding claim and one or more discrete further segments.

12. A multi-segment filter comprising:
a first segment comprising:
a longitudinally extending (e.g., substantially cylindrical) hollow tube of paper or other biodegradable (e.g., non-cellulose acetate) material;
a layer comprising paper filtering material and/or other biodegradable (e.g., non-cellulose acetate containing) filtering material engaged around the hollow tube; and
a wrapper (e.g., plugwrap) engaged around the layer comprising paper filtering material and/or other biodegradable (e.g., non-cellulose acetate containing) filtering material;
a second segment comprising paper; and
a third segment comprising carbon.

13. A method for making a mouthpiece or filter element comprising the steps of:
gathering and securing a sheet of paper or other biodegradable (e.g., non-cellulose acetate) material to form a longitudinally extending hollow tube;
advancing two or more sheets of paper filtering material and/or other biodegradable (e.g., non-cellulose acetate containing) filtering material in a longitudinal direction;
separating the two or more sheets of longitudinally advancing paper filtering material and/or other readily biodegradable (e.g., non-cellulose acetate containing) filtering material;
gathering or winding (e.g., spiraling) the separated sheets of longitudinally advancing paper filtering material and/or other biodegradable (e.g., non-cellulose acetate containing) filtering material around the longitudinally extending hollow tube to form a layer comprising paper filtering material and/or other biodegradable (e.g., non-cellulose acetate containing) filtering material engaged around the hollow tube;
gathering and securing a wrapper (e.g., plugwrap) around the layer comprising paper filtering material and/or other biodegradable (e.g., non-cellulose acetate containing) filtering material; and
cutting the continuous rod to form individual mouthpieces or filter elements.

14. A method according to claim 13 wherein the paper filtering material and/or other biodegradable (e.g., non-cellulose acetate containing) filtering material is filter paper, non-woven paper, airlaid paper or cellulose/lyocell/viscose based paper and/or the paper filtering material and/or other biodegradable (e.g., non-cellulose acetate containing) filtering material is a non-woven paper made with non-plastic plant based fibres (e.g., flax, hemp, jute, sisal, abaca, coconut, bamboo, starch or wood pulp) or a blend of these materials.

15. A mouthpiece or filter element obtained by the method of any one of claims 13 to 14.
